# EUROPEAN PATENT APPLICATION

(11) **EP 4 836 502 A1**
(43) Date of publication of application: **04.11.2026**
(21) Application number: 23963166.6
(22) Date of filing: 27.12.2023
(51) Int. Cl.: H04W 24/08, H04W 8/12, H04W 28/088, H04W 28/24, H04W 92/24

(54) **NETWORK NODE**

(71) Applicant: NTT DOCOMO, INC., Tokyo 100-6150 (JP)
(72) Inventor: ISHIKAWA, Hiroshi, Tokyo 100-6150 (JP); DOJIRI, Shunsuke, Tokyo 100-6150 (JP); ABE, Motohiro, Tokyo 100-6150 (JP)
(74) Representative: Hoffmann Eitle
(86) International application number: PCT/JP2023/047085
(87) International publication number: WO 2025/141817

(57) **Abstract**

A network node includes: a reception unit configured to receive, from a device of an intermediary, a first message for requesting creation of a session, the first message including capability information indicating a support of a capability related to a change of a service condition in a communication between different networks; and a transmission unit configured to transmit, to a first network node, a second message for requesting creation of the session, the second message including the capability information. The reception unit receives, from the first network node, a third message including the capability information as a response to the second message, the transmission unit transmits, to the device of the intermediary, a fourth message including the capability information as a response to the first message, the reception unit receives, from the device of the intermediary, a fifth message for requesting an update of service quality information for the session in accordance with the change of the service condition, and the transmission unit transmits, to the first network node, a sixth message for requesting the update of the service quality information.

## Description

### TECHNICAL FIELD

The present invention relates to a network node in a communication system.

### BACKGROUND ART

In 3GPP (registered trademark) (3rd Generation Partnership Project), in order to realize even larger system capacity, even faster data transmission speeds, even lower latency in a wireless communication section, etc., a wireless communication method called "5G" or "NR (New Radio)" is being discussed (hereinafter, the wireless communication method is referred to as "5G" or "NR"). In 5G, various wireless technologies have been discussed in order to meet requirements including latency equal to or less than 1 ms in a wireless section while realizing a throughput equal to or greater than 10 Gbps.

In NR, an architecture has been discussed which includes: 5GC (5G Core Network) corresponding to EPC (Evolved Packet Core) that is a core network in an LTE (Long Term Evolution) network architecture; and NG-RAN (Next Generation - Radio Access Network) corresponding to E-UTRAN (Evolved Universal Terrestrial Radio Access Network) that is a RAN (Radio Access Network) in the LTE network architecture (e.g., Non-Patent Literature 1).

### CITATION LIST

### Non-Patent Literature

Non-Patent Literature 1: 3GPP TS 23.501 V18.3.0 (2023-09)
Non-Patent Literature 2: 3GPP TS 23.502 V18.3.0 (2023-09)

### SUMMARY OF INVENTION

### TECHNICAL PROBLEM

In 5GC, N32 is specified as an interface between network operators, and, when network functions (NFs) perform communications between the visited network (Visited Public Land Mobile Network (VPLMN) and the home network (Home PLMN), an N32 connection is established between SEPPs (Security Endpoint Protocol Proxies) located at the boundary of the corresponding networks.

However, according to the current technical specification, with respect to the N32 communication, a process related to communications based on a trigger that is detected by a device of the intermediary cannot be performed.

The present invention has been made in view of the above points, and it is an object of the present invention to enable execution of a process related to communications based on a trigger that is detected by a device of the intermediary with respect to the communications between different networks in the communication system.

### SOLUTION TO PROBLEM

According to the disclosed technique, a network node is provided. The network node includes: a reception unit configured to receive, from a device of an intermediary, a first message for requesting creation of a session, the first message including capability information indicating a support of a capability related to a change of a service condition in a communication between different networks; and a transmission unit configured to transmit, to a first network node, a second message for requesting creation of the session, the second message including the capability information. The reception unit receives, from the first network node, a third message including the capability information as a response to the second message, the transmission unit transmits, to the device of the intermediary, a fourth message including the capability information as a response to the first message, the reception unit receives, from the device of the intermediary, a fifth message for requesting an update of service quality information for the session in accordance with the change of the service condition, and the transmission unit transmits, to the first network node, a sixth message for requesting the update of the service quality information.

### ADVANTAGEOUS EFFECTS OF INVENTION

According to the disclosed technique, a process related to communications based on a trigger that is detected by a device of the intermediary can be performed with respect to the communications between different networks in the communication system.

### BRIEF DESCRIPTION OF DRAWINGS

[Fig. 1] is a drawing for describing an example of a communication system.
[Fig. 2] is a drawing for describing an example of a communication system under a roaming environment.
[Fig. 3] is a drawing for describing a signal flow between network operators.
[Fig. 4] is a drawing for describing an overview in an embodiment of the present invention.
[Fig. 5] is a drawing illustrating an example of a sequence diagram related to the first method in an embodiment of the present invention.
[Fig. 6] is a drawing illustrating an example of a sequence diagram related to a modified example of the first method in an embodiment of the present invention.
[Fig. 7] is a drawing illustrating an example of a sequence diagram related to the second method in an embodiment of the present invention.
[Fig. 8] is a drawing illustrating an example of a sequence diagram related to the third method in an embodiment of the present invention.
[Fig. 9] is a drawing illustrating an example of a sequence diagram related to the fourth method in an embodiment of the present invention.
[Fig. 10] is a drawing illustrating an example of the first service example in an embodiment of the present invention.
[Fig. 11] is a drawing illustrating an example of the second service example in an embodiment of the present invention.
[Fig. 12] is a drawing illustrating an example of a functional structure of a base station 10 and a network node 30 in an embodiment of the present invention.
[Fig. 13] is a drawing illustrating an example of a functional configuration of a terminal 20 in an embodiment of the present invention.
[Fig. 14] is a drawing illustrating an example of a hardware structure of a base station 10, a terminal 20, and a network node 30 in an embodiment of the present invention.
[Fig. 15] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR).

Further, in an embodiment of the present invention, the expression, radio parameters are "configured" may mean that a predetermined value is pre-configured, or may mean that a radio parameter indicated by a network node 30 or a terminal 20 is configured.

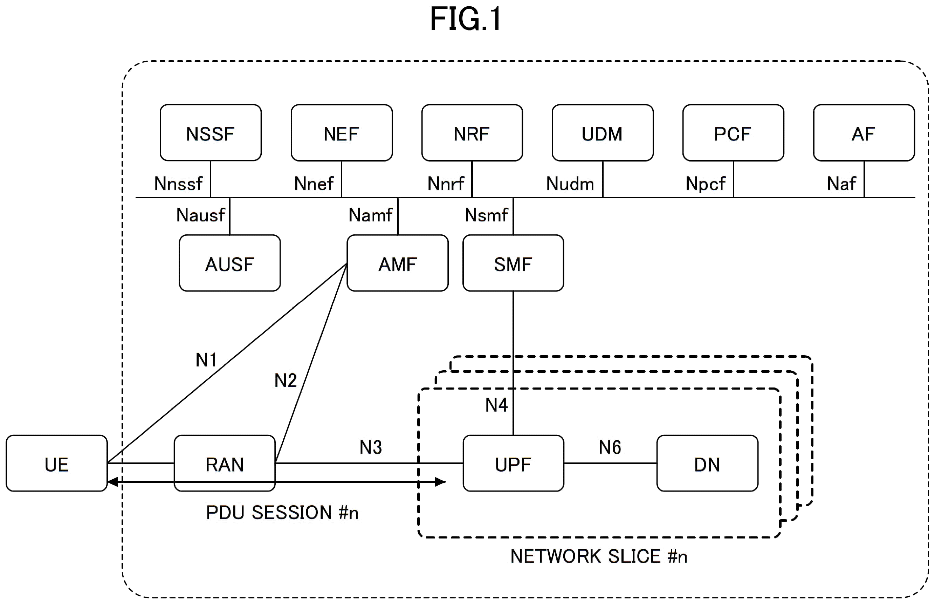

Fig. 1 is a drawing illustrating an example of a communication system. As illustrated in Fig. 1, the communication system consists of a UE (User Equipment) that is a terminal 20 and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN (Radio Access Network) is a network node 30 with wireless access functions, may include a base station 10, and is connected to UE, AMF (Access and Mobility Management Function), and UPF (User plane function). The AMF is a network node 30 having functions of, for example, terminating the RAN interface, terminating the NAS (Non-Access Stratum), managing registration, managing connection, managing reachability, and managing mobility. The UPF is a network node 30 interconnected with DN (Data Network), and has functions such as a PDU (Protocol Data Unit) session point to an external unit, routing and forwarding packets, and QoS (Quality of Service) handling of the user plane. UPF and DN are included in a network slice. In a wireless communication network in an embodiment of the present invention, multiple network slices are included.

AMF is connected to UE, RAN, SMF (Session Management Function), NSSF (Network Slice Selection Function), NEF (Network Exposure Function), NRF (Network Repository Function), UDM (Unified Data Management), AUSF (Authentication Server Function), PCF (Policy Control Function), and AF (Application Function). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, Naf based on the respective services.

The SMF is a network node 30 having functions such as session management, Internet Protocol (IP) address assignment and management of UE, DHCP (Dynamic Host Configuration Protocol) function, ARP (Address Resolution Protocol) proxy, and roaming function. The NEF is a network node 30 having a function of indicating capabilities and events to other NFs (Network Functions). The NSSF is a network node 30 having functions of, for example, selecting the network slice to which the UE is to be connected, determining the allowed NSSAI (Network Slice Selection Assistance Information), determining the configured NSSAI, and determining the AMF set to which the UE is to be connected. PCF is a network node 30 having a function of performing policy control of the network. AF is a network node 30 having a function of controlling an application server. NRF is a network node 30 having a function of discovering NF instances which provide services. UDM is a network node 30 that manages subscriber data and authentication data. UDM is connected to UDR (User Data Repository) that stores the above-described data.

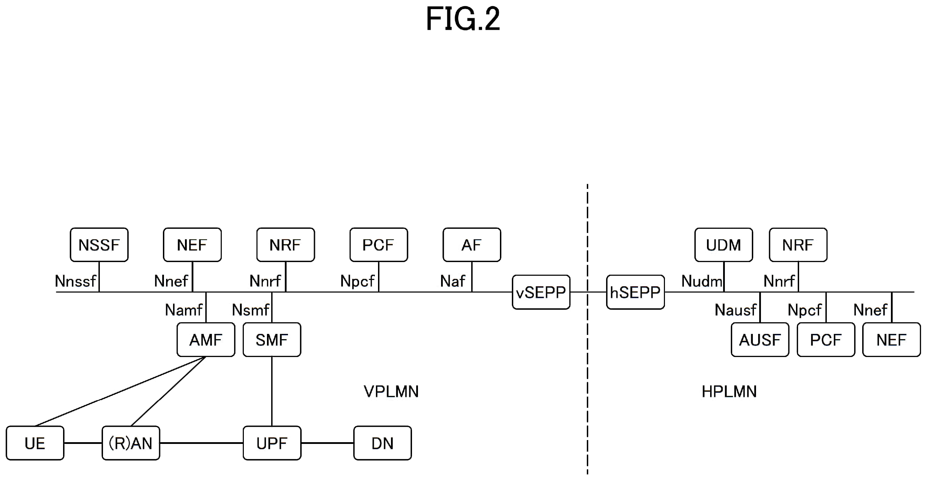

Fig. 2 is a drawing illustrating an example of a communication system under a roaming environment. As illustrated in Fig. 2, the network includes a UE that is a terminal 20, and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN is a network node 30 having a wireless access function, and is connected to UE, AMF, and UPF. AMF is a network node 30 having functions of terminating the RAN interface, terminating NAS, managing registration, managing connection, managing reachability, managing mobility, and the like. UPF is a network node 30 having functions of PDU session point to an external unit mutually connected to DN, routing and forwarding of packets, QoS handling of the user plane, and the like. UPF and DN form a network slice. In a wireless communication network in an embodiment of the present invention, multiple network slices are included.

AMF is connected to UE, RAN, SMF, NSSF, NEF, NRF, UDM, AUSF, PCF, AF, and SEPP (Security Edge Protection Proxy). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, and Naf based on the respective services.

SMF is a network node 30 having functions such as session management, IP address assignment and management for UE, a DHCP function, an ARP proxy, and a roaming function. NEF is a network node 30 having a function of indicating capabilities and events to other NFs. NSSF is a network node 30 having functions of selecting the network slice to which the UE is to be connected, determining NSSAI to be allowed, determining NSSAI to be configured, determining AMF set to which the UE is to be connected, and the like. PCF is a network node 30 having a function of performing policy control of the network. AF is a network node 30 having a function of controlling an application server. NRF is a network node 30 having a function of discovering NF instances which provide services. SEPP is a non-transparent proxy and filters control plane messages between PLMNs (Public Land Mobile Networks). vSEPP shown in Fig. 2 is a SEPP in a visited network, and hSEPP is a SEPP in a home network.

As shown in Fig. 2, the UE is in a roaming environment connected to RAN and AMF in VPLMN (Visited PLMN). VPLMN and HPLMN (Home PLMN) are connected to each other via vSEPP and hSEPP. The UE can communicate with the UDM of HPLMN via the AMF of VPLMN, for example. In addition, although Fig. 2 illustrates a Local Breakout form in which UPF is connected to DN within VPLMN, the form may be a home routed form in which UPF is connected to DN within HPLMN.

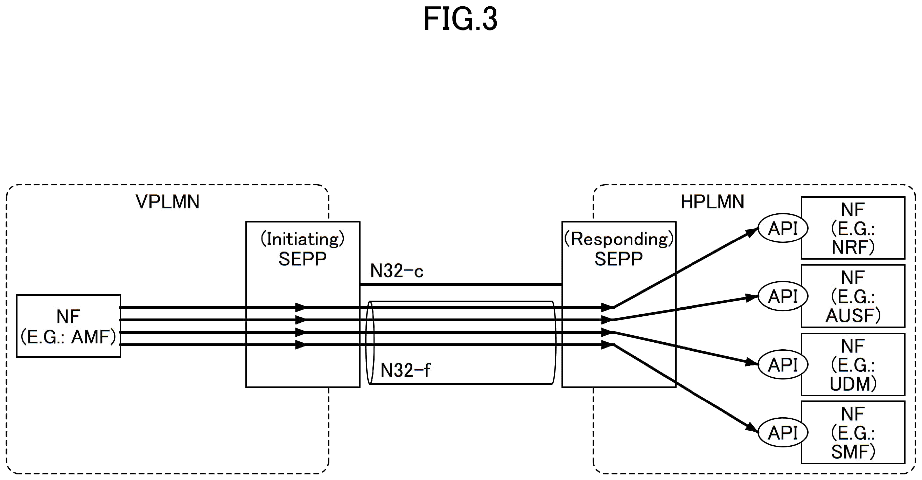

Fig. 3 is a drawing for describing a signal flow between network operators. As illustrated in Fig. 3, an NF (also referred to as NF consumer, NFc, cNF, etc.) that uses, from VPLMN, services of an NF that is located in HPLMN that is a network different from VPLMN uses, through N32-c, an API (Application Interface) provided by an NF (also referred to as NF producer, NFp, pNF, etc.) located in HPLMN by using N32-f that is established between SEPPs located in the two networks. According to the above-described operation: an inquiry with respect to NRF for discovering the communication target NF; authentication by AUSF; state registration such as location registration, and subscriber information acquisition with respect to UDM; and session generation, update, and disconnection with respect to SMF are performed. It is to be noted that SEPP located in VPLMN may be referred to as an initiating SEPP or a consumer SEPP (cSEPP), etc., and SEPP located in HPLMN may be referred to as a responding SEPP or a producer SEPP (pSEPP), etc. In addition, SMF located in VPLMN may be referred to as vSMF, and SMF located in HPLMN may be referred to as hSMF. In addition, N32-c and N32-f may be collectively referred to as N32.

N32-c is an interface used for exchanging security capabilities that are used between cSEPP and pSEPP.

N32-f is an interface used for ensuring security between cSEPP and pSEPP in communications between cNF and pNF. In a case where TLS (Transport Layer Security) is used for N32-f, HTTP signals are transmitted in the layer in which encryption by TLS is performed. In addition, in a case where PRINS (Protocol for N32 Interconnect Security) is used for N32-f, at the time when an intermediary relays signals, supplementary services can be provided by indicating the change of some parameters.

In the current technical specification, SEPPs that are located at both ends of N32 between operators are designed to relay signals. Here, although an intermediary is enabled to adjust values in the relayed signals, the intermediary is unable to change conditions of provision by using a condition detected by the intermediary as a trigger. As a result, the intermediary cannot provide additional services on behalf of the operator, the supplementary services including: limiting the communication band after exceeding predefined data amount; controlling, by the intermediary, starting and stopping of roaming data communications; or the like.

### (Embodiment 1)

Embodiment 1 will be described. In embodiment 1, a procedure of performing a process related to communications based on a trigger detected by a device of the intermediary with respect to communications between different networks in the communication system will be described.

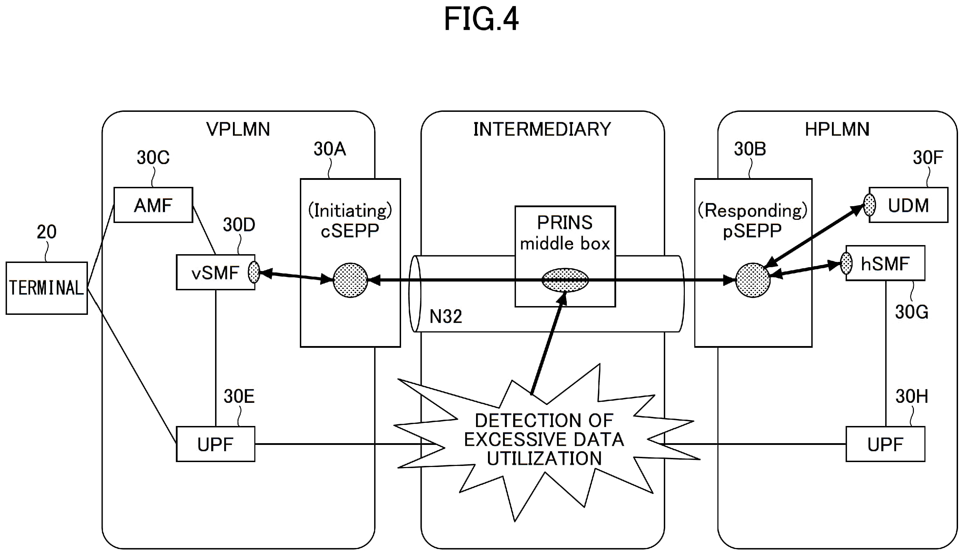

Fig. 4 is a drawing for describing an overview in an embodiment of the present invention. In Fig. 4, cSEPP 30A, AMF 30C, vSMF 30D, and UPF 30E are network nodes on the VPLMN side and pSEPP 30B, UDM 30F, hSMF 30G, and UPF 30H are network nodes on the HPLMN side. In addition, the terminal 20 is connected to AMF 30C and UPF 30E in VPLMN. In this embodiment, provided service conditions are enabled to be changed by using a condition detected by the intermediary as a trigger. For example, a device of the intermediary on the N32-f interface that is specified by using PRINS can autonomously insert a signal. Alternatively, the same state can be maintained between VPLMN and HPLMN by specifying a new API, or by adding an attribute, for some of the conventional NFs (SMF, UDM, etc.) and by indicating the QoS information change or disconnection with respect to the existing session. It is to be noted that there may be a case in which functions provided by the same NFs in VPLMN and HPLMN may be partially different.

Hereinafter, four methods will be described by taking into account: introduction of a new signal required for achieving the above-described operations; and reduction of impact on the network functions (NFs) in the current 3GPP technical specification.

### (First method)

In the first method, as a newly defined NF service function, the intermediary acts on behalf of the hSMF 30G in the HPLMN to perform changes, such as updating and modification, related to service conditions. The network functions changed from the current technical specification include cSEPP 30A, pSEPP 30B, hSMF 30G, and the intermediary. With respect to the intermediary, information (flag) indicating the new capability for performing the function is added to the PDU session creation request (Create PDU Session). In a case where the pSEPP 30B supports this new capability, the pSEPP 30B transfers the received flag to the hSMF 30G and indicates that the pSEPP 30B supports the new capability. The hSMF 30G transmits, to the pSEPP 30B, a request for subscription related to a notification of a change of service conditions. When an update of the service conditions becomes necessary, the intermediary transmits a notification of the update to the vSMF 30D. Although this notification is the same as a notification from the hSMF 30G to the vSMF 30D in the current technical specification, a signal (Empty Reformatted data) is required to be generated in N32-f. The intermediary transmits the above-described signal to the cSEPP 30A. The cSEPP 30A transmits a change notification corresponding to the subscription to the hSMF 30G.

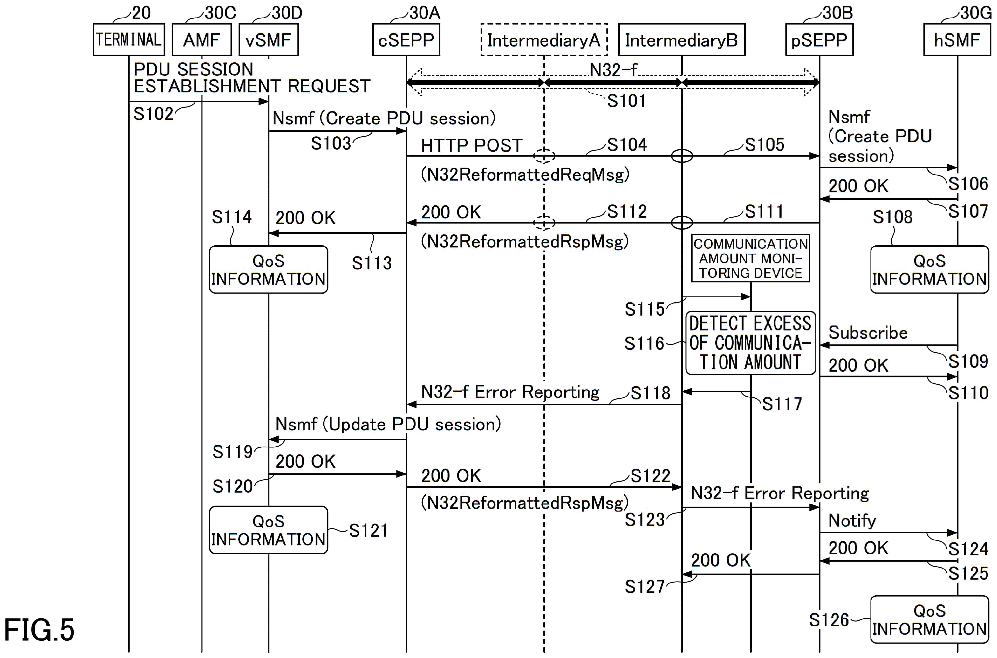

Fig. 5 is a drawing illustrating an example of a sequence diagram related to the first method in an embodiment of the present invention. Hereinafter, processing of each of the steps in Fig. 5 will be described. It is to be noted that the cSEPP 30A, the pSEPP 30B, the hSMF 30G, and the intermediary support new functions.

S101: N23-f is established between the cSEPP 30A and the pSEPP 30B.

S102: The terminal 20 transmits a message of a request for establishing a PDU session to the vSMF 30D via the AMF 30C. The details of the request will be referred to Non-Patent Literature 2 clause 4.3 (the same applies for the subsequent sequence diagrams).

S103: The vSMF 30D transmits a message (Nsmf (Create PDU session)) of a request for creating a PDU session to the cSEPP 30A. The details of the request will be referred to Non-Patent Literature 2 clause 4.3 (the same applies for the subsequent sequence diagrams).

S104: The cSEPP 30A transmits a request message in N32-f (HTTP POST (N32ReformattedReqMsg)) including the message received in S103 to the pSEPP 30B via the intermediaryA and the intermediaryB that are intermediaries.

S105: The intermediaryB adds a flag indicating the support of capability of changing service conditions to the message transmitted in S104 and transmits the message to which the flag is added to the pSEPP 30B. The pSEPP 30B recognizes that the intermediaryB supports the capability.

S106: The pSEPP 30B transmits, to the hSMF 30G, a message of a request for creating a PDU session (Nsmf (Create PDU session)) included in the message received in S105. The message includes a flag indicating that capability of changing service conditions is supported. The hSMF 30G recognizes that the intermediaryB and the pSEPP 30B support the capability.

S107: The hSMF 30G transmits, to the pSEPP 30B, 200 OK as a response message corresponding to the message received in S106. The response message includes a flag indicating that capability of changing service conditions is supported. The pSEPP 30B recognizes that the hSMF 30G supports the capability.

S108: The hSMF 30G configures information related to service quality (QoS) for the PDU session related to the message received in S106. Here, the configuration of information related to service quality (QoS) is a configuration that is configured with respect to the service conditions, and the communication speed that is allowed for the user plane, etc., is configured. Hereinafter, with respect to the configuration of QoS information, the same applies to the first method to the fourth method.

S109: The hSMF 30G transmits, to the pSEPP 30B, a message for a request for subscription related to the change of QoS information (service conditions). The pSEPP 30B receives the subscription.

S110: The hSEPP 30B transmits, to the hSMF 30G, 200 OK as a response message corresponding to the message received in S109.

S111: The pSEPP 30B transmits a response message in N32-f (N32ReformattedRspMsg) including 200 OK received in S107 to the cSEPP 30A via the intermediaryA and the intermediaryB. The response message includes a flag indicating that capability of changing service conditions is supported. The intermediaryB recognizes that the pSEPP 30B and the hSMF 30G support the capability.

S112: The intermediaryB transfers the message transmitted in S111 to the pSEPP 30A.

S113: The cSEPP 30A transmits, to the vSMF 30D, 200 OK as a response message corresponding to the message received in S103.

S114: The vSMF 30D configures information related to service quality (QoS) for the PDU session related to the message transmitted in S103.

Hereinafter, the subsequent processes in the current technical specification related to the establishment of the PDU session (refer to Non-Patent Literature 2, clause 4.3) are perfromed among the vSMF 30D, the AMF 30C, and the terminal 20.

S115: The intermediaryB recognizes that the PDU session is to be established based on the message received in S111 and transmits, to the communication amount monitoring device that monitors the user plane communication amount, a message indicating monitoring of the user plane communication amount related to the PDU session.

S116: The communication amount monitoring device detects that the user plane communication amount for which monitoring is indicated has exceeded a predetermined amount.

S117: The communication amount monitoring device transmits a message indicating that excess of communication amount has been detected to the intermediaryB.

S118: The intermediaryB transmits, to the cSEPP 30A, a message in N32-f (N32-f Error Reporting) for requesting an update of the PDU session in order to change the QoS information (service conditions).

S119: The cSEPP 30A transmits, to the vSMF 30D, a message for requesting an update of the PDU session (Nsmf (Update PDU session)).

S120: The vSMF 30D transmits, to the cSEPP 30A, 200 OK as a response message corresponding to the message received in S119.

S121: The vSMF 30D configures information related to service quality (QoS) corresponding to an update of the PDU session related to the message received in S119. For example, the vSMF 30D changes the allowed user plane communication speed configured in S114 to a slower communication speed (that is, performs band restriction related to the communication speed).

Hereinafter, the subsequent processes in the current technical specification related to an update of the PDU session (refer to Non-Patent Literature 2, clause 4.3) are performed among the vSMF 30D, the AMF 30C, and the terminal 20.

S122: The cSEPP 30A transmits, to the intermediaryB, a response message in N32-f (N32ReformattedRspMsg) including 200 OK received in S120.

S123: The intermediaryB transmits, to the pSEPP 30B, a message in N32-f (N32-f Error Reporting) for requesting a change of QoS information (service conditions).

S124: The pSEPP 30B transmits a notification corresponding to the subscription received in S109 to the hSMF 30G.

S125: The hSMF 30G transmits, to the pSEPP 30B, 200 OK as a response message corresponding to the message received in S124.

S126: The hSMF 30G configures information related to service quality (QoS) for an update of the PDU session related to the notification received in S124. For example, the hSMF 30G changes the allowed user plane communication speed configured in S108 to a slower communication speed.

S127: The pSEPP 30B transmits, to the intermediaryB, 200 OK as a response message corresponding to the message received in S123.

### (Modified example of the first method)

A modified example of the first method will be described. In this modified example, a process for a case in which the hSMF 30G does not support the capability of changing service conditions will be described. The network functions changed from the current technical specification include the cSEPP 30A, the pSEPP 30B, and the intermediary.

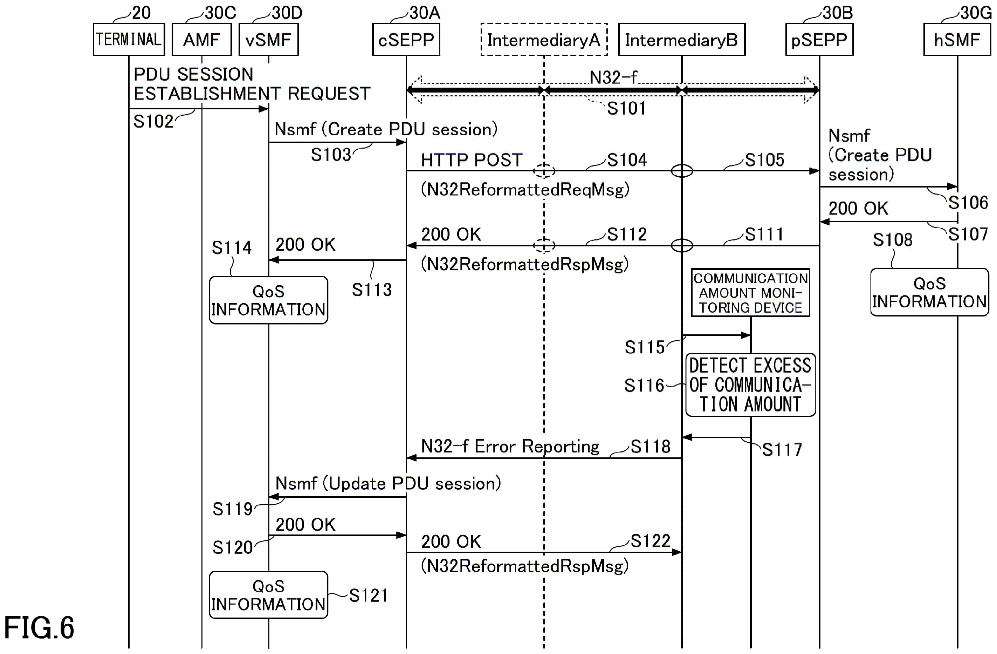

Fig. 6 is a drawing illustrating an example of a sequence diagram related to a modified example of the first method in an embodiment of the present invention. In this modified example, as compared with the sequence diagram of the first method, the messages transmitted in S107 and S111 do not include a flag indicating that the capability of changing service conditions is supported. In addition, processes among the intermediaryB, the pSEPP 30B, and the hSMF 30G, that are S109, S110, S123 to S127, are not performed. Therefore, only the QoS information on the VPLMN side is changed, and service conditions are changed based on the change.

### (Second method)

In the second method, as a newly defined NF service function, service quality (QoS) values in the subscription data stored by the UDM 30F are changed. The network functions changed from the current technical specification include the pSEPP 30B, the UDM 30F, and the intermediary. The intermediary obtains current subscription data from the UDM 30F via the pSEPP 30B after completion of PDU session generation (Create PDU Session) according to the same procedure as the current technical specification. Here, the reason for obtaining current subscription data by the intermediary is for enabling the QoS information that has been changed by the subsequent processes to be changed back to the information before the change by keeping the information before the change. In a case where the change of QoS information becomes necessary, the intermediary causes the UDM 30F to change QoS information in the subscription data via the pSEPP 30B. Hereinafter, based on processes of the current technical specification, the UDM 30F transmits an indication for changing QoS information for the PDU session to the hSMF 30G, and then, the QoS information is updated by having the indication indicated to the vSMF 30D.

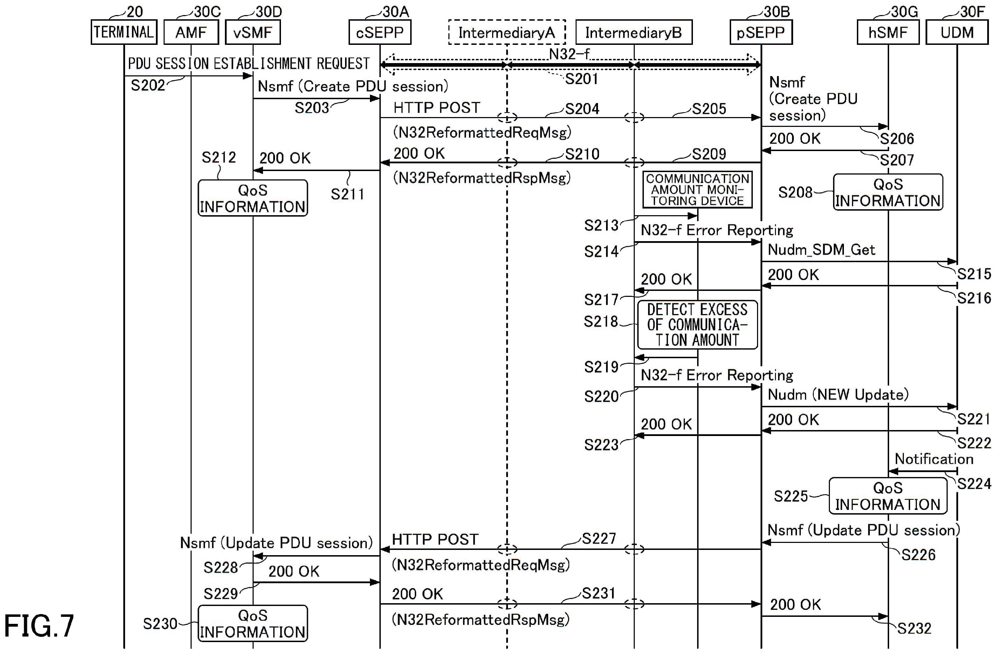

Fig. 7 is a drawing illustrating an example of a sequence diagram related to the second method in an embodiment of the present invention. Hereinafter, processing of each of the steps in Fig. 7 will be described. It is to be noted that the pSEPP 30B, the UDM 30F, and the intermediary support new functions.

S201: N23-f is established between the cSEPP 30A and the pSEPP 30B.

S202: The terminal 20 transmits a message of a request for establishing a PDU session to the vSMF 30D via the AMF 30C.

S203: The vSMF 30D transmits a message (Nsmf (Create PDU session)) of a request for creating a PDU session to the cSEPP 30A.

S204: The cSEPP 30A transmits a request message in N32-f (HTTP POST (N32ReformattedReqMsg) including a message received in S203 to the pSEPP 30B via the intermediaryA and the intermediaryB that are intermediaries.

S205: The intermediaryB transfers the message transmitted in S204 to the pSEPP 30B.

S206: The pSEPP 30B transmits, to the hSMF 30G, a message of a request for creating a PDU session (Nsmf (Create PDU session)) included in the message received in S205.

S207: The hSMF 30G transmits, to the pSEPP 30B, 200 OK as a response message corresponding to the message received in S206.

S208: The hSMF 30G configures information related to service quality (QoS) for the PDU session related to the message received in S206.

S209: The pSEPP 30B transmits a response message in N32-f (N32ReformattedRsqMsg) including 200 OK received in S207 to the cSEPP 30A via the intermediaryA and the intermediaryB.

S210: The intermediaryB transfers the message transmitted in S209 to the cSEPP 30A.

S211: The cSEPP 30A transmits, to the vSMF 30D, 200 OK as a response message corresponding to the message received in S203.

S212: The vSMF 30D configures information related to service quality (QoS) for the PDU session related to the message transmitted in S203.

Hereinafter, the subsequent processes in the current technical specification related to the establishment of the PDU session (refer to Non-Patent Literature 2, clause 4.3) are performed among the vSMF 30D, the AMF 30C, and the terminal 20.

S213: The intermediaryB recognizes that the PDU session is to be established based on the message received in S209 and transmits, to the communication amount monitoring device that monitors the user plane communication amount, a message indicating monitoring of the user plane communication amount related to the PDU session.

S214: The intermediaryB transmits, to the pSEPP 30B, a message in N32-f (N32-f Error Reporting) including a message for requesting acquisition of subscription data. The subscription data includes information related to service quality.

S215: The pSEPP 30B transmits, to the UDM 30F, the message for requesting acquisition of subscription data (Nudm_SDM_Get) included in the message in S214.

S216: The UDM 30F transmits, to the pSEPP 30B, a response message (200 OK) including the subscription data requested by the message received in S215.

S217: The pSEPP 30B transmits, to the intermediaryB, the response message (200 OK) received in S216. The intermediaryB stores the subscription data included in the received response message.

S218: The communication amount monitoring device detects that the user plane communication amount for which monitoring is indicated has exceeded a predetermined amount.

S219: The communication amount monitoring device transmits a message indicating that excess of communication amount has been detected to the intermediaryB.

S220: The intermediaryB transmits, to the pSEPP 30B, a message in N32-f (N32-f Error Reporting) including a message for requesting an update of subscription data (a change of QoS information) in order to change service conditions (band restriction of communication speed)

S221: The pSEPP 30B transmits, to the UDM 30F, a message for requesting an update of subscription data (Nudm (new Update)) included in the message received in S220. The UDM 30F updates subscription data in accordance with the received message.

S222: The UDM 30F transmits, to the pSEPP 30B, a response message (200 OK) indicating completion of the update of subscription data that is requested by the message received in S221.

S223: The pSEPP 30B transmits, to the intermediaryB, a response message (200 OK) received in S221.

S224: The UDM 30F transmits, to the hSMF 30G, a notification for requesting a change of QoS information in accordance with the subscription data changed in S221. Transmission of the notification can be performed based on an operation described in the current technical specification.

S225: The hSMF 30G updates information related to service quality (QoS) based on the notification received in S224.

S226: The hSMF 30G transmits, to the pSEPP 30B, a message for requesting an update of the PDU session (Nsmf (Update PDU session)).

S227: The pSEPP 30B transmits a request message in N32-f (HTTP POST (N32ReformattedReqMsg)) including the message received in S226 to the cSEPP 30A via the intermediaryA and the intermediaryB.

S228: The cSEPP 30A transmits, to the vSMF 30D, a message for requesting an update of the PDU session (Nsmf (Update PDU session)) included in the message received in S227.

S229: The vSMF 30D transmits, to the cSEPP 30A, 200 OK as a response message corresponding to the message received in S228.

S230: The vSMF 30D updates information related to service quality (QoS) based on the message received in S228.

S231: The cSEPP 30A transmits a response message in N32-f (N32ReformattedRspMsg) including 200 OK received in S229 to the pSEPP 30B via the intermediaryA and the intermediaryB.

S232: The pSEPP 30B transmits, to the hSMF 30G, 200 OK included in the message received in S231.

### (Third method)

In the third method, as a newly defined NF service function, the hSMF 30G triggers an update of the PDU session. The network functions changed from the current technical specification include the pSEPP 30B, the hSMF 30G, and the intermediary. The intermediary performs transmission to the pSEPP 30B by adding information (flag) indicating the support of the new capability of performing the function to a message for requesting generation of a PDU session (Create PDU Session). Furthermore, the pSEPP 30B transmits a message including the flag to the hSMF 30G. The hSMF 30B causes the pSEPP 30B and the intermediary to recognize that the hSMF 30B itself supports the new capability by adding the flag to a response message corresponding to the message. In addition, in a case where a change of QoS information becomes necessary, the intermediary causes an update of QoS information to be performed, by transmitting a message indicating the change to the hSMF 30G via the pSEPP 30B. Furthermore, based on the procedure described in the current technical specification, the hSMF 30G transmits a message for updating the PDU session to the vSMF 30D, and thus, QoS information is updated by the vSMF 30D.

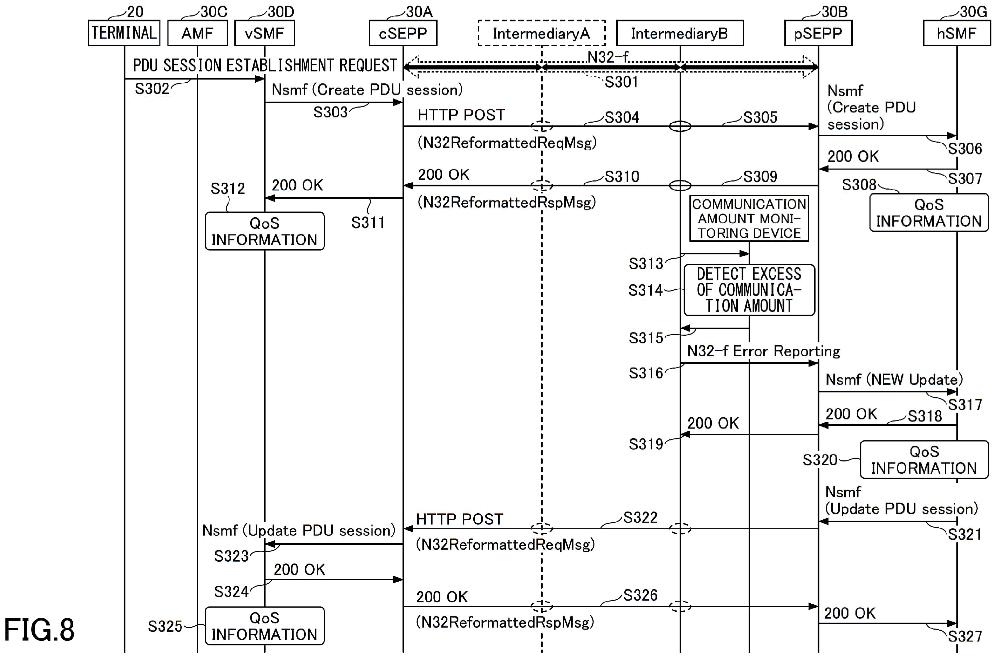

Fig. 8 is a drawing illustrating an example of a sequence diagram related to the third method in an embodiment of the present invention. Hereinafter, processing of each of the steps in Fig. 8 will be described. It is to be noted that the pSEPP 30B, the hSMF 30G, and the intermediary support new functions.

S301: N23-f is established between the cSEPP 30A and the pSEPP 30B.

S302: The terminal 20 transmits a message of a request for establishing a PDU session to the vSMF 30D via the AMF 30C.

S303: The vSMF 30D transmits a message (Nsmf (Create PDU session)) of a request for creating a PDU session to the cSEPP 30A.

S304: The cSEPP 30A transmits a request message in N32-f (HTTP POST (N32ReformattedReqMsg) including the message received in S303 to the pSEPP 30B via the intermediaryA and the intermediaryB that are intermediaries.

S305: The intermediaryB adds a flag indicating the support of capability of changing service conditions to the message transmitted in S304 and transmits the message to which the flag is added to the pSEPP 30B. The pSEPP 30B recognizes that the intermediaryB supports the capability.

S306: The pSEPP 30B transmits, to the hSMF 30G, a message of a request for creating a PDU session (Nsmf (Create PDU session)) included in the message received in S305. The message includes a flag indicating that capability of changing service conditions is supported. The hSMF 30G recognizes that the intermediaryB and the pSEPP 30B support the capability.

S307: The hSMF 30G transmits, to the pSEPP 30B, 200 OK as a response message corresponding to the message received in S306. The message includes a flag indicating that capability of changing service conditions is supported. The pSEPP 30B recognizes that the hSMF 30G supports the capability.

S308: The hSMF 30G configures information related to service quality (QoS) for the PDU session related to the message received in S306.

S309: The pSEPP 30B transmits a response message in N32-f (N32ReformattedRspMsg) including 200 OK received in S307 to the cSEPP 30A via the intermediaryA and the intermediaryB. The response message includes a flag indicating that capability of changing service conditions is supported. The intermediaryA recognizes that the pSEPP 30B and the hSMF 30G support the capability.

S310: The intermediaryB transfers the message transmitted in S309 to the pSEPP 30A.

S311: The cSEPP 30A transmits, to the vSMF 30D, 200 OK as a response message corresponding to the message received in S303.

S312: The vSMF 30D configures information related to service quality (QoS) for the PDU session related to the message transmitted in S303.

S313: The intermediaryB recognizes that the PDU session is to be established based on the message received in S309 and transmits, to the communication amount monitoring device that monitors the user plane communication amount, a message indicating monitoring of the user plane communication amount related to the PDU session.

S314: The communication amount monitoring device detects that the user plane communication amount for which monitoring is indicated has exceeded a predetermined amount.

S315: The communication amount monitoring device transmits a message indicating that excess of communication amount has been detected to the intermediaryB.

S316: The intermediaryB transmits, to the pSEPP 30B, a message in N32-f (N32-f Error Reporting) for requesting a change of QoS information (service conditions).

S317: The pSEPP 30B transmits, to the hSMF 30G, a message (Nsmf (new Update)) for requesting a change of QoS configuration (service conditions) included in the message received in S316.

S318: The hSMF 30G transmits, to the pSEPP 30B, a response message (200 OK) corresponding to the message received in S317.

S319: The pSEPP 30B transmits, to the intermediaryB, the response message (200 OK) received in S318.

S320: The hSMF 30G updates information related to service quality (QoS) in accordance with the request received in S317. For example, the hSMF 30G changes the allowed user plane communication speed configured in S308 to a slower communication speed.

Hereinafter, processes related to an update of the PDU session based on the procedure described in the current technical specification are performed in steps from S321 to S327.

S321: The hSMF 30G transmits, to the pSEPP 30B, a message for requesting an update of the PDU session (Nsmf (Update PDU session)).

S322: The pSEPP 30B transmits a request message in N32-f (HTTP POST (N32ReformattedReqMsg)) including the message received in S321 to the cSEPP 30A via the intermediaryA and the intermediaryB. The message includes information related to service quality (QoS).

S323: The cSEPP 30A transmits, to the vSMF 30D, a message for requesting an update of the PDU session (Nsmf (Update PDU session)) included in the message received in S322.

S324: The vSMF 30D transmits, to the cSEPP 30A, 200 OK as a response message corresponding to the message received in S323.

S325: The vSMF 30D updates information related to service quality (QoS) based on the message received in S324.

S326: The cSEPP 30A transmits a response message in N32-f (N32ReformattedRspMsg) including 200 OK received in S324 to the pSEPP 30B via the intermediaryA and the intermediaryB.

S327: The pSEPP 30B transmits, to the hSMF 30G, 200 OK included in the message received in S326.

### (Modified example of the third method)

A modified example of the third method will be described. In this modified example, in S321 illustrated in Fig. 8, the hSMF 30G transmits, to the pSEPP 30B, a message for requesting a release of the PDU session (Nsmf (Release PDU session)) instead of transmitting a message for requesting an update of the PDU session (Nsmf (Update PDU session)). In the subsequent steps, processes for releasing the PDU session are performed instead of processes for updating the PDU session. According to the above-described operation, data communication services are stopped.

### (Fourth method)

In the fourth method, as a newly defined NF service function, the vSMF 30D triggers a release of the PDU session. The network functions changed from the current technical specification include the vSMF 30D, the cSEPP 30A, and the intermediary. The vSMF 30D performs transmission to the cSEPP 30A by adding information (flag) indicating that the new capability for performing the function is supported to a message for requesting the PDU session creation (Create PDU Session). Furthermore, the cSEPP 30A transmits a message including the flag to the pSEPP 30B via the intermediary. The intermediary checks the flag when relaying the message. In addition, the intermediary causes the pSEPP 30B and the intermediary to recognize that the intermediary itself supports the new capability by adding the flag to a response message corresponding to the message. In addition, the intermediary transmits a message for indicating a release of the PDU session to the vSMF 30D via the cSEPP 30A at the time of releasing the PDU session. The vSMF 30D performs a release of the PDU session based on the procedure described in the current technical specification.

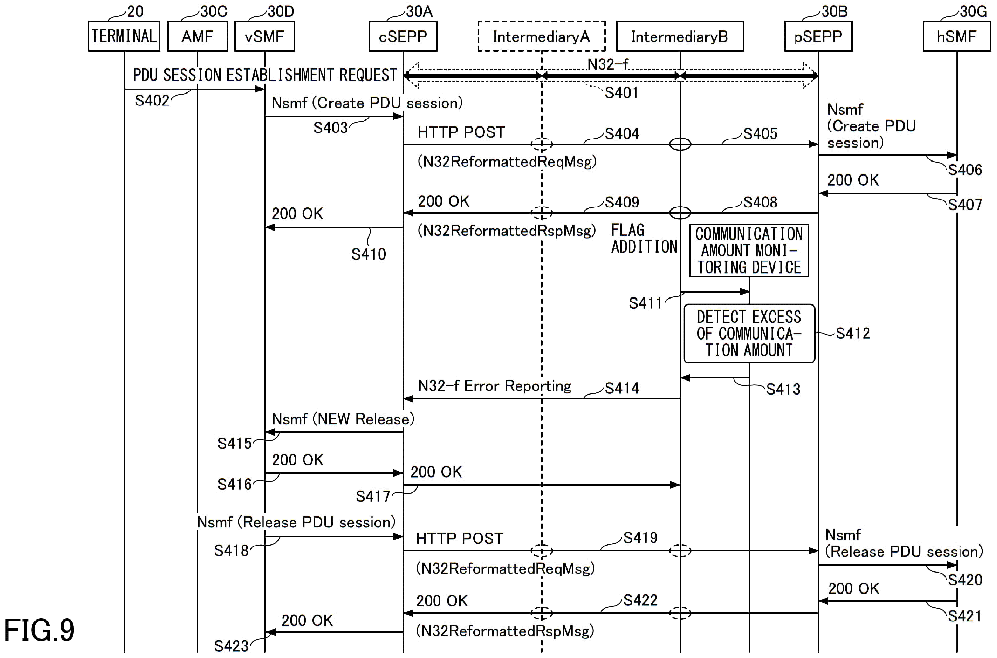

Fig. 9 is a drawing illustrating an example of a sequence diagram related to the fourth method in an embodiment of the present invention. Hereinafter, processing of each of the steps in Fig. 9 will be described. It is to be noted that the vSMF 30D, the cSEPP 30A, and the intermediary support new functions.

S401: N23-f is established between the cSEPP 30A and the pSEPP 30B.

S402: The terminal 20 transmits a message of a request for establishing a PDU session to the vSMF 30D via the AMF 30C.

S403: The vSMF 30D transmits a message (Nsmf (Create PDU session)) of a request for creating a PDU session to the cSEPP 30A. The message includes information (flag) indicating that new capability related to a trigger of a release of the PDU session is supported. The cSEPP 30A recognizes that the vSMF 30D supports the new capability.

S404: The cSEPP 30A transmits a request message in N32-f (HTTP POST (N32ReformattedReqMsg)) including the message received in S103 to the pSEPP 30B via the intermediaryA and the intermediaryB that are intermediaries. The message includes information (flag) indicating that new capability related to a trigger of a release of the PDU session is supported.

S405: The intermediaryB confirms that the message transmitted in S404 includes the information (flag) indicating the new capability related to a trigger of a release of the PDU session, recognizes that the vSMF 30D and the cSEPP 30A support the new capability, and transfers the message to the pSEPP 30B.

S406: The pSEPP 30B transmits, to the hSMF 30G, a message of a request for creating a PDU session (Nsmf (Create PDU session)) included in the message received in S405.

S407: The hSMF 30G transmits, to the pSEPP 30B, 200 OK as a response message corresponding to the message received in S406.

S408: The pSEPP 30B transmits a response message in N32-f (N32ReformattedRspMsg) including 200 OK received in S407 to the cSEPP 30A via the intermediaryA and the intermediaryB.

S409: The intermediaryB performs transmission to the pSEPP 30A by adding information (flag) indicating new capability related to a trigger of a release of the PDU session to the message transmitted in S408. The cSEPP 30A recognizes that the intermediaryB supports the new capability.

S410: The cSEPP 30A transmits, to the vSMF 30D, 200 OK as a response message corresponding to the message received in S403. The message includes information (flag) indicating that new capability related to a trigger of a release of the PDU session is supported. The vSMF 30D recognizes that the intermediaryB and the vSMF 30D supports the new capability.

S411: The intermediaryB recognizes that the PDU session is to be established based on the message received in S408 and transmits, to the communication amount monitoring device that monitors the user plane communication amount, a message indicating monitoring of the user plane communication amount related to the PDU session.

S412: The communication amount monitoring device detects that the user plane communication amount for which monitoring is indicated has exceeded a predetermined amount.

S413: The communication amount monitoring device transmits a message indicating that excess of communication amount has been detected to the intermediaryB.

S414: The intermediaryB transmits, to the cSEPP 30A, a message in N32-f (N32-f Error Reporting) for requesting a release of the PDU session.

S415: The cSEPP 30A transmits, to the vSMF 30D, a message for requesting a release of the PDU session (Nsmf (new Release)) included in the message received in S414.

S416: The vSMF 30D transmits, to the cSEPP 30A, a response message (200 OK) corresponding to the message received in S415.

S417: The cSEPP 30A transmits, to the intermediaryB, the response message (200 OK) received in S416.

Hereinafter, processes related to a release of the PDU session based on the procedure described in the current technical specification are performed in steps from S418 to S423.

S418: The vSMF 30D transmits a message (Nsmf (Release PDU session)) of a request for releasing the PDU session to the cSEPP 30A.

S419: The cSEPP 30A transmits a request message in N32-f (HTTP POST (N32ReformattedReqMsg)) including the message received in S418 to the pSEPP 30B via the intermediaryA and the intermediaryB.

S420: The pSEPP 30B transmits, to the hSMF 30G, a message of a request for releasing the PDU session (Nsmf (Release PDU session)) included in the message received in S419.

S421: The hSMF 30G transmits, to the pSEPP 30B, 200 OK as a response message corresponding to the message received in S420.

S422: The pSEPP 30B transmits a response message in N32-f (N32ReformattedRspMsg) including 200 OK received in S421 to the cSEPP 30A via the intermediaryA and the intermediaryB.

S423: The cSEPP 30A transmits, to the vSMF 30D, 200 OK as a response message corresponding to the message received in S422.

According to the above-described embodiments, a process related to communications based on a trigger that is detected by a device of the intermediary can be performed with respect to the communications between different networks in the communication system. It is to be noted that, although, in the above-described embodiments, an example in which a process of changing service conditions (restriction of communication speed) is triggered by a notification that is related to excess of communication amount and is received from the communication amount monitoring device, the trigger and the process may be a different trigger and a different process.

### (Advantageous effects)

According to the technique of the present invention, a process based on a trigger that is detected by a device of the intermediary (for example, services such as data communication band restriction, start and stop of data communication, or the like) can be performed.

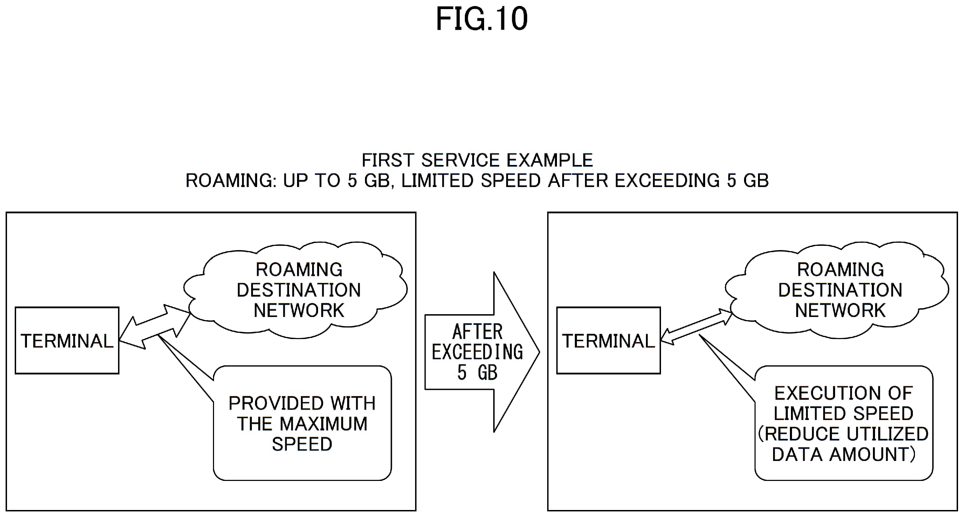

Fig. 10 is a drawing illustrating an example of the first service example in an embodiment of the present invention. As illustrated in Fig. 10, the intermediary can provide a supplementary service that enables the use of up to a predetermined data amount (for example, 5 GB) at the maximum speed in the roaming destination network and limits the communication band after detection of an excess of the data amount.

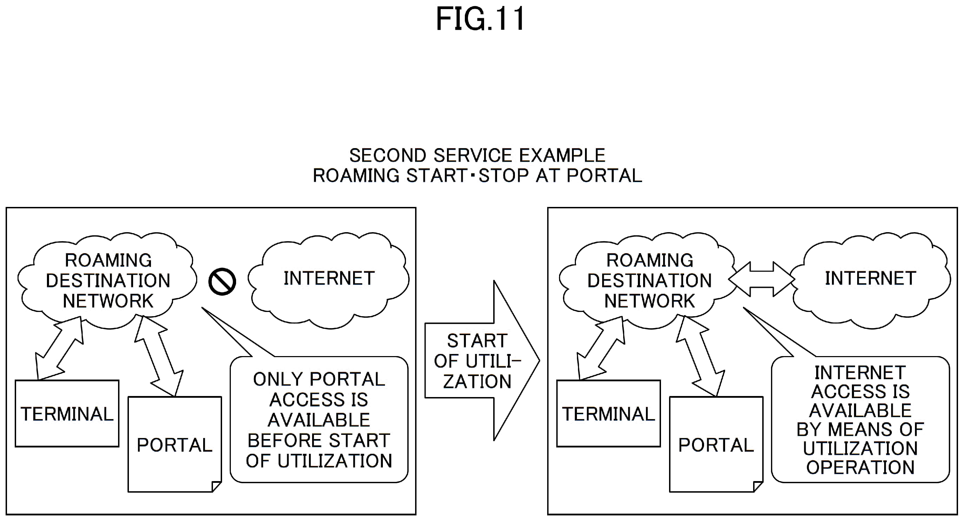

Fig. 11 is a drawing illustrating an example of the second service example in an embodiment of the present invention. As illustrated in Fig. 11, the intermediary can control the start and stop of the data communication (permission of access to the Internet) in the roaming destination network by using a portal operation by the user as a trigger.

### (Device configuration)

Next, a functional configuration example of the base station 10, network node 30, and the terminal 20 that perform processes and operations described above will be described. The base station 10, the network node 30, and the terminal 20 include functions for implementing the embodiments described above. It should be noted, however, that each of the base station 10, the network node 30, and the terminal 20 may include only some of the functions in the embodiments.

### <Base station 10 and network node 30>

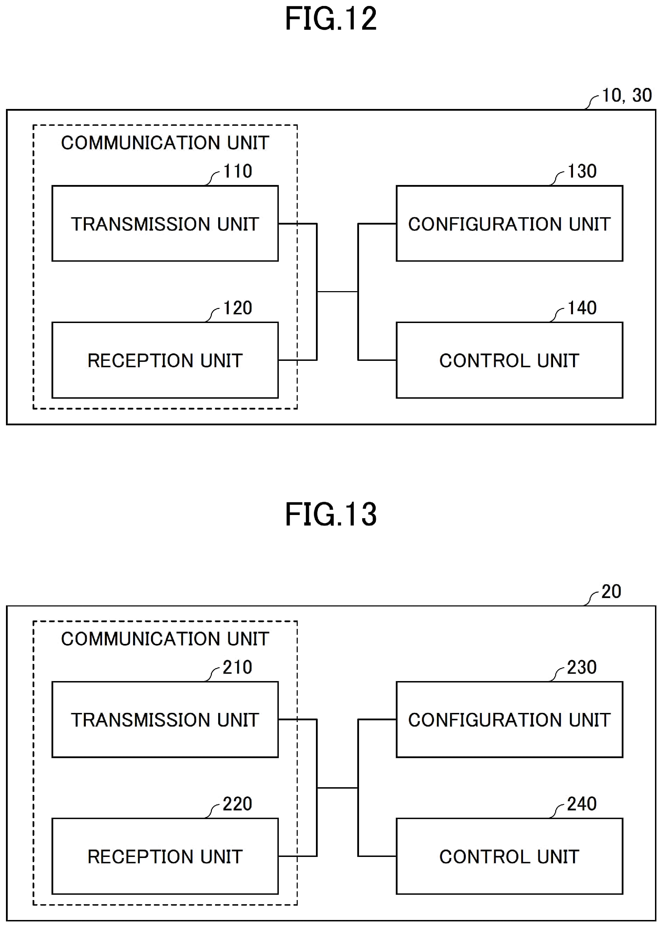

Fig. 12 is a drawing illustrating an example of a functional configuration of the base station 10 and the network node 30. As shown in Fig. 12, the base station 10 includes a transmission unit 110, a reception unit 120, a configuration unit 130, and a control unit 140. The functional configuration illustrated in Fig. 12 is merely an example. Functional divisions and names of functional units may be anything as long as operations according to an embodiment of the present invention can be performed. Note that the network node 30 may have the same functional configuration as the base station 10. In addition, the network nodes 30 having multiple different functions in the system architecture may be composed of multiple network nodes 30 separated for each function.

The transmission unit 110 includes a function for generating a signal to be transmitted to the terminal 20 or to another network node 30 and transmitting the signal in a wired manner or wireless manner. The reception unit 120 includes a function for receiving various signals transmitted from the terminal 20 or another network node 30, and for acquiring, for example, information of an upper layer from the received signals. A communication unit including the transmission unit 110 and the reception unit 120 may be configured.

The configuration unit 130 stores preset configuration information and various configuration information items to be transmitted to the terminal 20 in a storage apparatus and reads the preset configuration information from the storage apparatus as necessary. Contents of the configuration information are, for example, information related to communication channels in the IMS data channel network.

As described in an embodiment of the present invention, the control unit performs a process related to communications based on a trigger detected by a device of the intermediary with respect to communications between different networks. Further, the control unit 140 performs a process related to communications with the terminal 20. The functional units related to signal transmission in the control unit 140 may be included in the transmission unit 110, and the functional units related to signal reception in the control unit 140 may be included in the reception unit 120.

### <Terminal 20>

Fig. 13 is a diagram illustrating an example of a functional configuration of the terminal 20. As shown in Fig. 13, the terminal 20 includes a transmission unit 210, a reception unit 220, a configuration unit 230, and a control unit 240. The functional configuration illustrated in Fig. 13 is merely an example. Functional divisions and names of functional units may be anything as long as operations according to an embodiment of the present invention can be performed. In addition, the communication apparatus that is a resource holder 20 may have a functional configuration similar to the terminal 20.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving control signals or reference signals, and the like, transmitted from the network node 30. A communication unit including the transmission unit 210 and the reception unit 220 may be configured.

The configuration unit 230 stores various types of configuration information received from the network node 30 by the reception unit 220 in the storage device and reads the configuration information from the storage device as necessary. In addition, the configuration unit 230 also stores pre-configured configuration information. Contents of the configuration information are, for example, information related to communication channels in the IMS data channel network.

The control unit 240 performs a process related to the connection between the base station 10 and the network node 30 as described in the embodiments. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 12 and Fig. 13) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

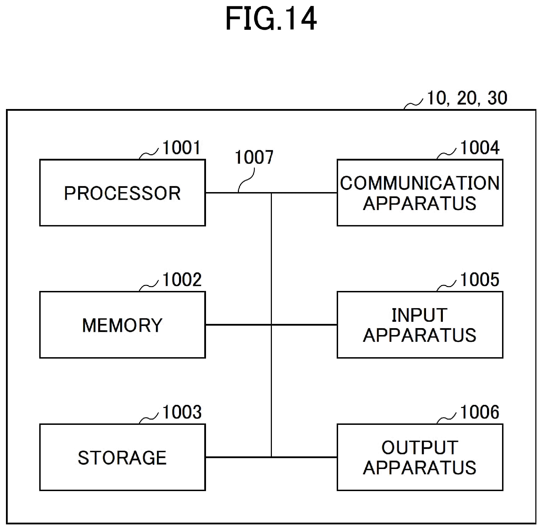

For example, the base station 10, the network node 30, terminal 20, etc., according to an embodiment of the present disclosure may function as a computer for processing the radio communication method of the present disclosure. Fig. 14 is a diagram to show an example of a hardware structure of the base station 10 and the terminal 20 according to one embodiment. The network node 30 may have the same hardware configuration as the base station 10. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 or the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 12 may be implemented by control programs that are stored in the memory 1002 and that operate on the processor 1001. In addition, for example, the control unit 240 of the terminal 20 illustrated in Fig. 13 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

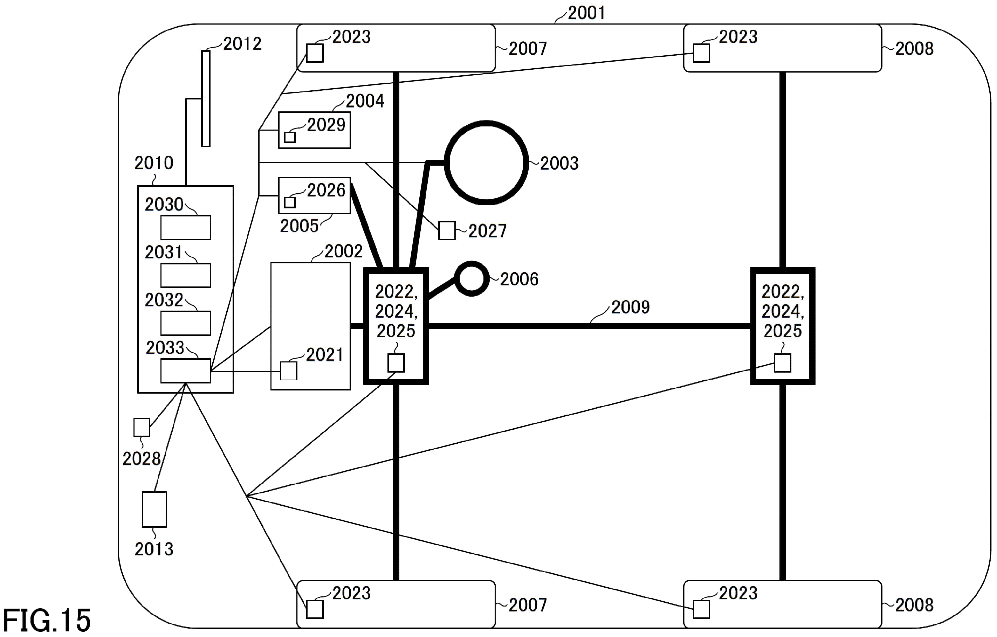

Fig. 15 shows an example of a configuration of a vehicle 2001. As shown in Fig. 15, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheels or the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### <Clauses>

(Clause 1) A network node including:
   a reception unit configured to receive, from a device of an intermediary, a first message for requesting creation of a session, the first message including capability information indicating a support of capability related to a change of a service condition in communications between different networks; and
   a transmission unit configured to transmit, to a first network node, a second message for requesting creation of the session, the second message including the capability information, wherein
   the reception unit receives, from the first network node, a third message including the capability information as a response corresponding to the second message,
   the transmission unit transmits, to the device of the intermediary, a fourth message including the capability information as a response to the first message,
   the reception unit receives, from the device of the intermediary, a fifth message for requesting an update of service quality information for the session in accordance with the change of the service condition, and
   the transmission unit transmits, to the first network node, a sixth message for requesting the update of the service quality information.
(Clause 2) A network node including:
   a reception unit configured to receive, from a first network node, a first message for requesting creation of a session, the first message including capability information indicating a support of capability related to a change of a service condition in communications between different networks;
   a transmission unit configured to transmit, to the first network node, a second message including the capability information as a response corresponding to the first message; and
   a control unit configured to configure service quality information for the session, wherein
   the reception unit receives, from the first network node, a third message for requesting an update of service quality information for the session in accordance with the change of the service condition, and
   the control unit updates the service quality information in accordance with the third message.
(Clause 3) A network node including:
   a reception unit configured to receive, from a first network node, a first message for requesting creation of a session, the first message including capability information indicating a support of a capability related to a change of a service condition in communications between different networks; and
   a transmission unit configured to transmit, to a second network node, a second message for requesting creation of the session including the capability information via a device of an intermediary, wherein
   the reception unit receives, from the second network node, a third message including the capability information as a response to the second message via the device of the intermediary,
   the transmission unit transmits, to the first network node, a fourth message including the capability information as a response to the first message,
   the reception unit receives, from the device of the intermediary, a fifth message for requesting a release of the session in accordance with the change of the service condition, and
   the transmission unit transmits, to the first network node, a sixth message for requesting the release of the session.
(Clause 4) A network node including;
   a transmission unit configured to transmit, to a first network node, a first message for requesting creation of a session, the first message including capability information indicating a support of capability related to a change of a service condition in communications between different networks; and
   a reception unit configured to receive, from the first network node, a second message including the capability information as a response message corresponding to the first message, wherein
   the reception unit receives, from the first network node, a third message for requesting a release of the session in accordance with the change of the service condition.

According to any one of clause 1 to clause 4, in the communication system, communications can be performed in which a configuration related to communication permission is configured for each connection of a network function in communication with another network.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, these values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, radio resource control (RRC) signaling, medium access control (MAC) signaling), broadcast information (master information block (MIB), system information block (SIB)), and other signals or combinations thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. In addition, a plurality of systems may be combined (for example, a combination of: at least one of LTE or LTE-A; 5G, and the like) to be applied. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a Boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, terms such as "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompass a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Network node
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A network node comprising:
a reception unit configured to receive, from a device of an intermediary, a first message for requesting creation of a session, the first message including capability information indicating a support of capability related to a change of a service condition in communications between different networks; and
a transmission unit configured to transmit, to a first network node, a second message for requesting creation of the session, the second message including the capability information, wherein
the reception unit receives, from the first network node, a third message including the capability information as a response corresponding to the second message,
the transmission unit transmits, to the device of the intermediary, a fourth message including the capability information as a response to the first message,
the reception unit receives, from the device of the intermediary, a fifth message for requesting an update of service quality information for the session in accordance with the change of the service condition, and
the transmission unit transmits, to the first network node, a sixth message for requesting the update of the service quality information.

2. A network node comprising:
a reception unit configured to receive, from a first network node, a first message for requesting creation of a session, the first message including capability information indicating a support of capability related to a change of a service condition in communications between different networks;
a transmission unit configured to transmit, to the first network node, a second message including the capability information as a response corresponding to the first message; and
a control unit configured to configure service quality information for the session, wherein
the reception unit receives, from the first network node, a third message for requesting an update of service quality information for the session in accordance with the change of the service condition, and
the control unit updates the service quality information in accordance with the third message.

3. A network node comprising:
a reception unit configured to receive, from a first network node, a first message for requesting creation of a session, the first message including capability information indicating a support of a capability related to a change of a service condition in communications between different networks; and
a transmission unit configured to transmit, to a second network node, a second message for requesting creation of the session including the capability information via a device of an intermediary, wherein
the reception unit receives, from the second network node, a third message including the capability information as a response to the second message via the device of the intermediary,
the transmission unit transmits, to the first network node, a fourth message including the capability information as a response to the first message,
the reception unit receives, from the device of the intermediary, a fifth message for requesting a release of the session in accordance with the change of the service condition, and
the transmission unit transmits, to the first network node, a sixth message for requesting the release of the session.

4. A network node comprising:
a transmission unit configured to transmit, to a first network node, a first message for requesting creation of a session, the first message including capability information indicating a support of capability related to a change of a service condition in communications between different networks; and
a reception unit configured to receive, from the first network node, a second message including the capability information as a response message corresponding to the first message, wherein
the reception unit receives, from the first network node, a third message for requesting a release of the session in accordance with the change of the service condition.
